# EUROPEAN PATENT APPLICATION

(11) **EP 1 486 767 A1**
(43) Date of publication of application: **15.12.2004**
(21) Application number: 04102474.6
(22) Date of filing: 03.06.2004
(51) Int. Cl.: G01N 1/28, G01N 21/03, B01L 3/00

(54) **Sample matrix for infrared spectroscopy**

(30) Priority: 10.06.2003 US 457971
(71) Applicant: THE GOODYEAR TIRE & RUBBER COMPANY, Akron, Ohio 44316-0001 (US)
(72) Inventor: Rodewald, Stephan, Canal Fulton, OH 44614 (US)
(74) Representative: Kutsch, Bernd

(57) **Abstract**

The present invention more specifically discloses in an infrared spectrometer which includes an infrared source, an optical array, an infrared detector and a means for recording transmitted spectrum over a range of wave numbers; the improvement which comprises the infrared spectrometer including a sample carrier which is comprised of a mesh which is opaque or totally transparent to infrared light, wherein the holes in the mesh have a minimum size that is sufficient to allow particles having a particle size of smaller than 25 microns to pass through the mesh and a maximum size that will hold particles having a particle size of greater than 841 microns. It also discloses a suitable sample carrier and a process for determining the infrared spectrum of a sample.

## Description

### Background of the Invention

Infrared spectroscopy is an analytical method that has been widely used for many years in determining the chemical composition and the presence of functional groups. In conventional infrared spectroscopy, the sample being analyzed must be held within a beam within the infrared spectrometer. The sample holder serves the function of positioning and holding the sample within the infrared beam. The holder also serves the critical function of presenting the infrared beam a uniformly distributed sample of adequate thickness to achieve a satisfactory infrared absorbance spectrum. In conventional techniques, this can be achieved by casting the sample into a uniform film which is held within the infrared beam. However, such a technique is only applicable to samples that can be formed into a film from the molten state or from a liquid solution or dispersion. In any case, such techniques are frequently quite labor intensive, and even using the highest level of care can result in film samples which do not possess a high level of uniformity. Non-uniform samples suffer from detrimental defects such as voids or excessive sample thickness which lead to spectra with poor resolution, skewed base lines and low signal to noise ratios.

Another widely used conventional technique for preparing samples for infrared analysis involves making an admixture of the sample and a sample matrix, such as potassium bromide, and pressing the admixture into a pellet under application of vacuum. The admixture utilized in making such pellets is typically made by finally grinding the matrix material with the material being sampled. Some drawbacks associated with this particular conventional technique include the problem of the carrier matrix absorbing some of the infrared light which, of course, leads to a skewed base line over the wave number range of the infrared spectrum. Another problem is the pellet of the carrier material such as potassium bromide can absorb moisture that can also lead to hydroxyl absorbance bands not associated with the sample. Unfortunately, it is impossible to distinguish the contribution of such hydroxyl absorbance bands that are associated with the sample from those that are contributed by absorbed water. The preparation of such sample containing pellets is also a labor intensive process and even in cases where a high level of care is employed defects in the pellets are common. Such defects can result from improper pelletization due to inadequate grinding, vacuum, or pressure. Defective pellets can also result from improper protection from moisture.

Another means for holding samples during infrared analysis involves affixing the sample to a window. The window is typically a monocrystalline sheet of a material that is transparent to infrared light over the wave number range being investigated. Such materials for utilization in making windows include potassium bromide, zinc selenide and silicon or germanium. One significant drawback associated with utilizing such windows as the sample holder is high cost and the degradation of the surface of the window over time. Another drawback of utilizing windows as the infrared sample holder is that the material employed in manufacturing the window can also absorb infrared light causing a fluctuation in the base line of the infrared spectrum recorded. Another drawback associated with utilizing such windows is that the material of which the window is made may not be chemically inert with respect to the sample or ambient atmosphere.

R. Cournoyer, J. C. Shearer, and D.H. Anderson, "Fourier Transform Infrared Analysis Below the One-Nanogram Level," Analytical Chemistry, Volume 49, Number 14, December 1977, disclose that the interfacing of microscopy with Fourier Transform Infrared Spectroscopy is a useful combination showing samples of less than 1 ng to be identified. In this technique, the sample is usually supported by a thin sodium chloride plate centered in an aperture. In this technique, the sample mount is oriented in an 8x beam condenser in an FTIR spectrometer where the multi-scan signal averaging technique produces a spectrum with the desired signal-to-noise ratio.

C.J. Curry, M.J. Whitehouse and J.M. Chalmers, "Ultramicrosampling In Infrared Spectroscopy Using Small Apertures," Applied Spectroscopy, Volume 39, Number 1, 1985, provide an excellent description of various prior art techniques utilized in single micro-aperture infrared spectroscopy.

### Summary of the Invention

The utilization of the sample holder of this invention in infrared spectroscopy overcomes some of the major problems typically encountered with sample holders used in traditional techniques. More specifically, the utilization of the sample holder of this invention eliminates interference fringes typically encountered with films that are prepared from the sample or with monocrystalline sheet sample holders. Traditional sample preparation is frequently a highly labor intensive, multi-step process. The present invention offers a significant advance in the state of sample preparation by virtue of being a simple and robust technique requiring relatively little labor in a single, easy step. Sometimes there is a desire to procure the infrared spectrum of samples that are not film forming. The sample holder of the present invention can be used equally well with samples that do not form solid films, such as low molecular weight crystalline materials, oils and amorphous solid materials.

The present invention more specifically discloses an infrared spectrometer according to claim 7. The mesh size is within the range of 20 to 700 (wherein the holes in the mesh have a minimum size that is sufficient to allow particles having a particle size of smaller than 25 microns (µm) to pass through the mesh and a maximum size that will hold particles having a particle size of greater than 841 microns).

The subject invention also reveals a process for determining the infrared spectrum of a sample according to claim 8.

The present invention further discloses a sample carrier for holding a sample during infrared spectroscopic analysis according to claim 1.

### Brief Description of the Drawings

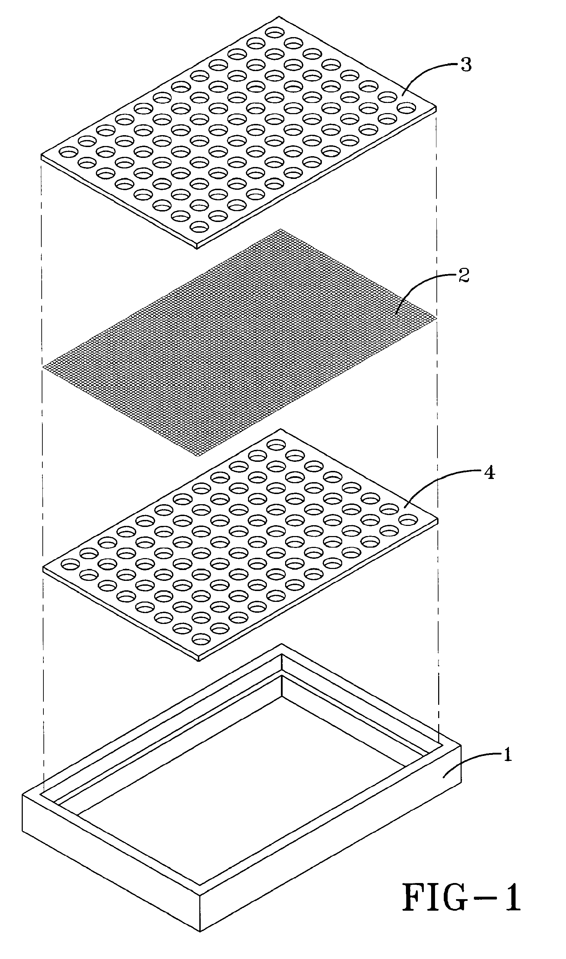

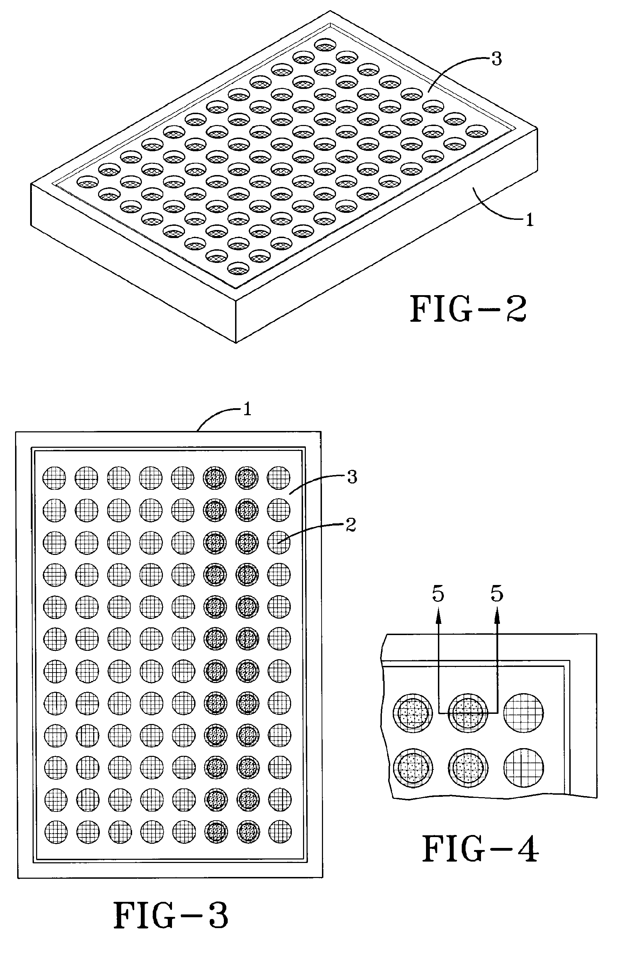

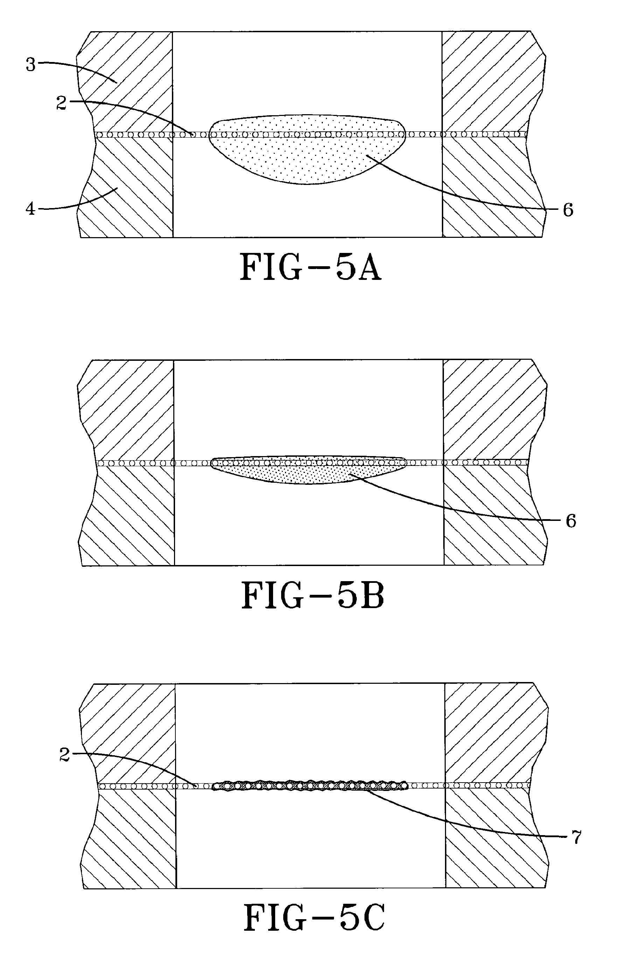

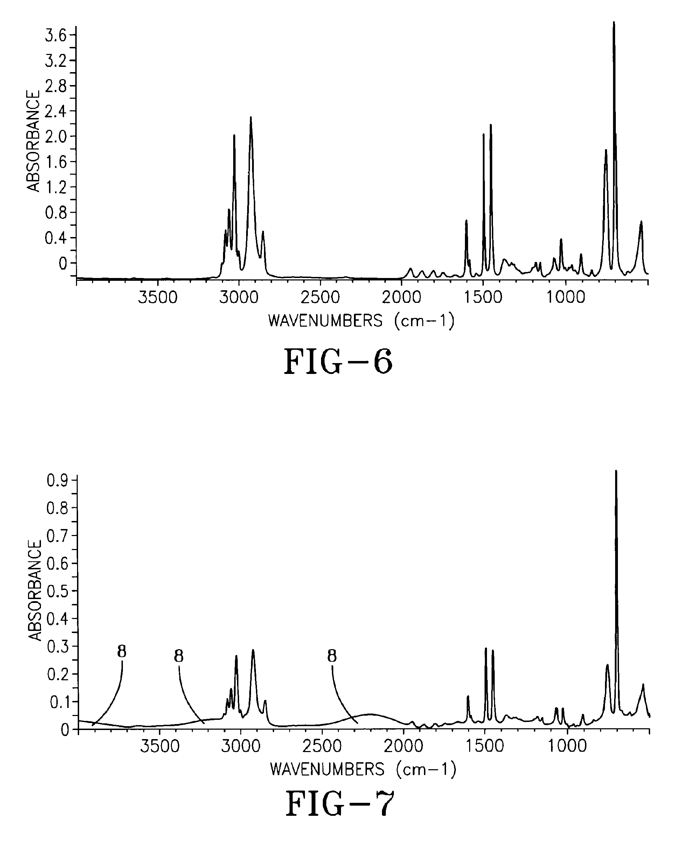

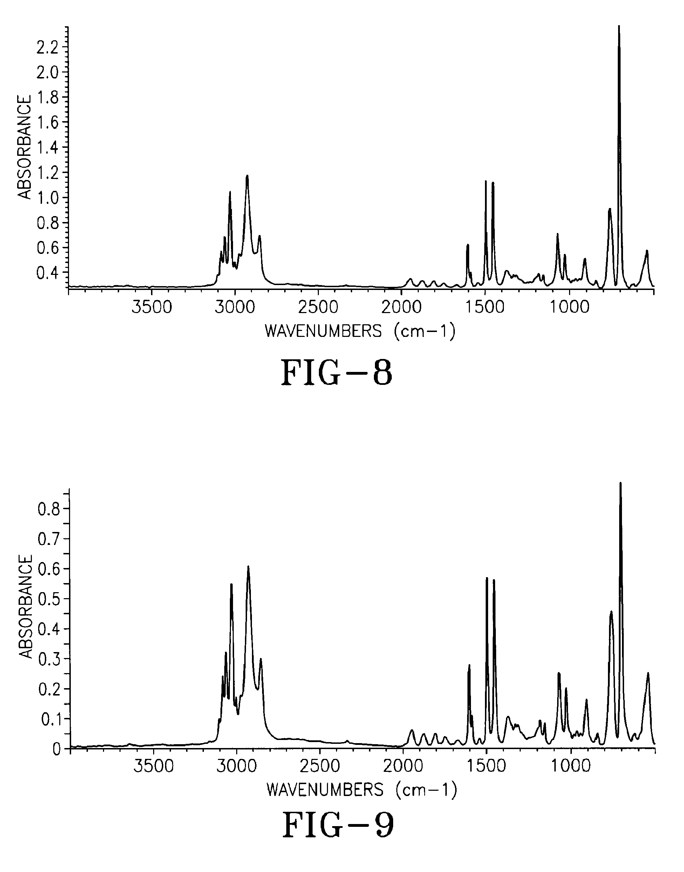

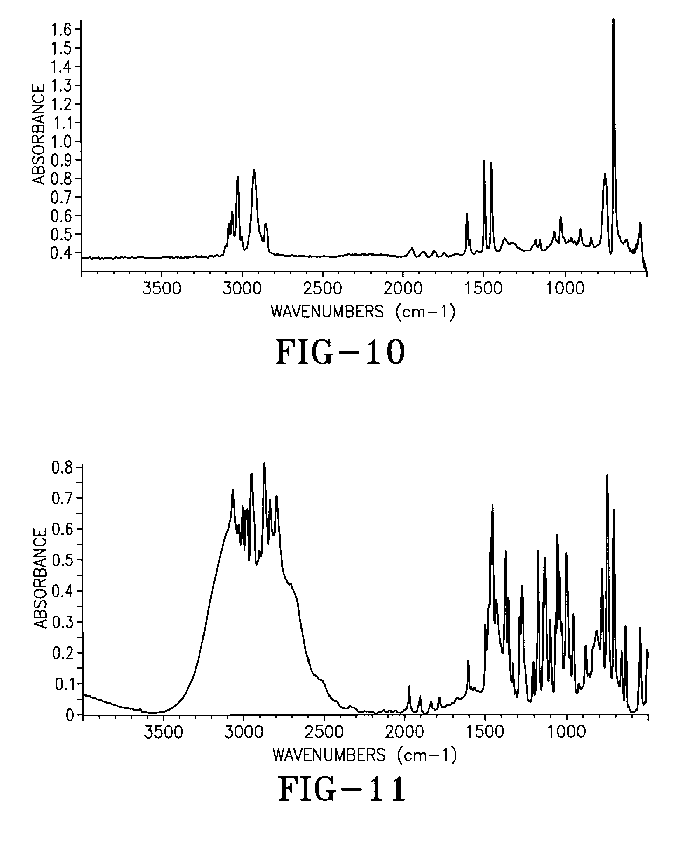

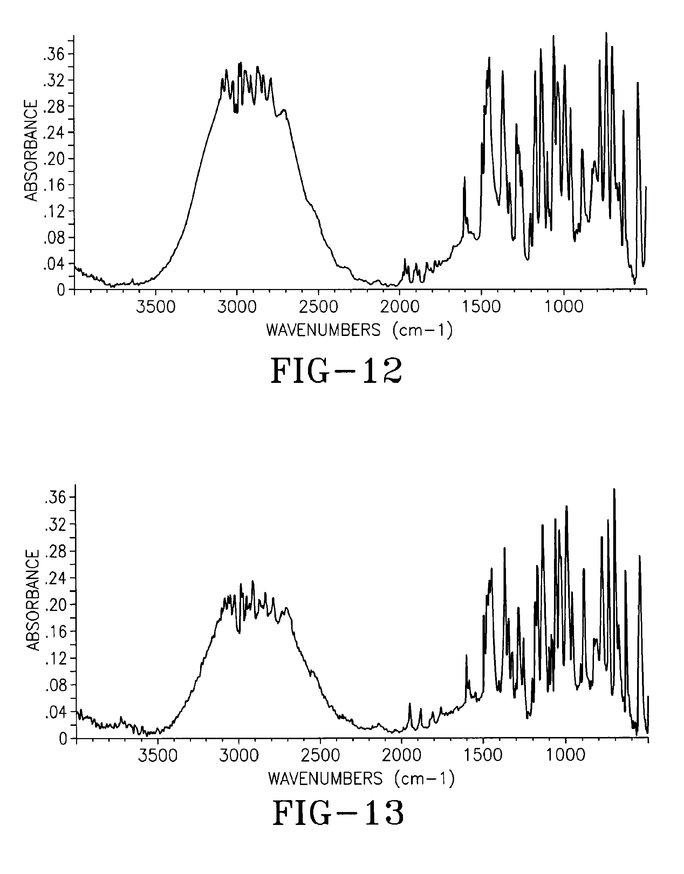

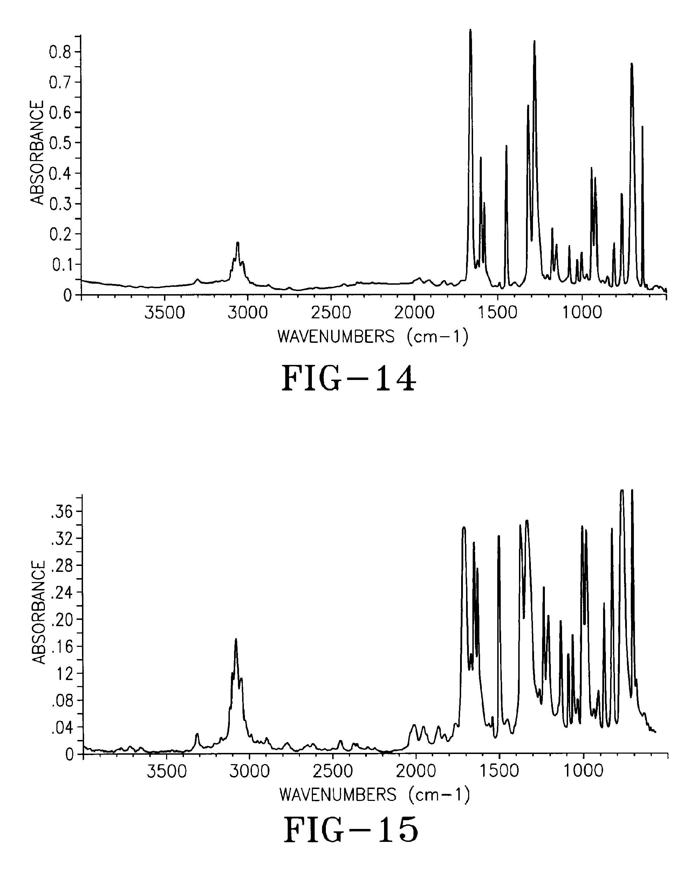

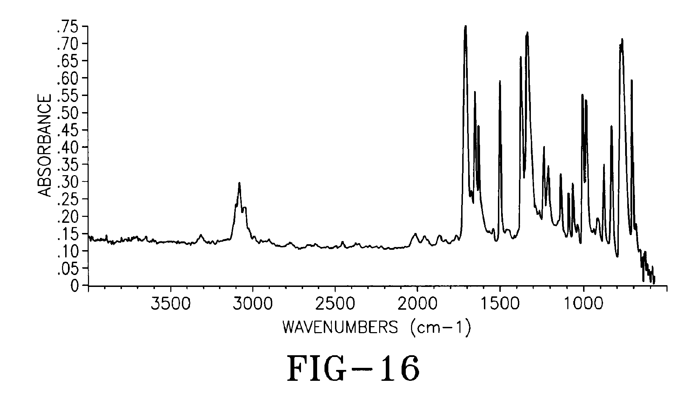

Fig-1 is a fragmentary view of the sample holder of this invention showing the frame 1, the mesh 2, an upper mask 3 of a microtiter plate, and a lower mask 4 of a microtiter plate.
Fig-2 is a perspective view of the sample holder of this invention.
Fig-3 is a top view of the sample holder of this invention.
Fig-4 is a top view of a corner portion of the sample holder of this invention.
Fig-5A is a cross sectional view of a position as viewed in the direction of the arrows 5 as shown Fig-4 immediately after the application of a sample in a liquid carrier.
Fig-5B is a cross sectional view of a position as viewed in the direction of the arrows 5 as shown Fig-4 after a portion of the liquid carrier for the sample has evaporated.
Fig-5C is a cross sectional view of a position as viewed in the direction of the arrows 5 as shown Fig-4 after the liquid carrier for the sample has evaporated.
Fig-6 shows a FTIR (Fourier Transform Infrared) spectrum of a secondary polystyrene film standard.
Fig-7 shows a FTIR spectrum of a polystyrene standard on a silicon plate.
Fig-8 shows a FTIR spectrum of a polystyrene standard on a 135 mesh wire cloth (the holes in the 135 mesh wire cloth allow particles having a particle size of smaller than 110 microns (µm) to pass through the mesh and hold particles having a particle size of greater than 100 microns).
Fig-9 shows a FTIR spectrum of a polystyrene standard on a 230 mesh wire cloth (the holes in the 230 mesh wire cloth allow particles having a particle size of smaller than 63 microns (µm) to pass through the mesh and hold particles having a particle size of greater than 63 microns).
Fig-10 shows a FTIR spectrum of a polystyrene standard on a 400 mesh wire cloth (the holes in the 400 mesh wire cloth allow particles having a particle size of smaller than 37 microns (µm) to pass through the mesh and hold particles having a particle size of greater than 37 microns).
Fig-11 shows a FTIR spectrum of ephedrine on a silicon plate.
Fig 12 shows a FTIR spectrum of ephedrine on a 230 mesh wire cloth (the holes in the 230 mesh wire cloth allow particles having a particle size of smaller than 63 microns (µm) to pass through the mesh and hold particles having a particle size of greater than 63 microns).
Fig 13 shows a FTIR spectrum of ephedrine on a 400 mesh wire cloth (the holes in the 400 mesh wire cloth allow particles having a particle size of smaller than 37 microns (µm) to pass through the mesh and hold particles having a particle size of greater than 37 microns).
Fig-14 shows a FTIR spectrum of benzophenone on a silicon plate.
Fig-15 shows a FTIR spectrum of benzophenone on a 230 mesh wire cloth (the holes in the 230 mesh wire cloth allow particles having a particle size of smaller than 63 microns (µm) to pass through the mesh and hold particles having a particle size of greater than 63 microns).
Fig-16 shows a FTIR spectrum of benzophenone on a 400 mesh wire cloth (the holes in the 400 mesh wire cloth allow particles having a particle size of smaller than 37 microns (µm) to pass through the mesh and hold particles having a particle size of greater than 37 microns).
Fig-6 shows the resolution that was obtained with the polystyrene film standard. As can be seen by comparing it to Figs 7-10, essentially the same resolution was achieved by using a conventional silicon plate or the wire mesh sample matrix of the present invention. Additionally, Figs 8-10 are free of interference fringes 8 as are visible in Fig-7 which used a conventional silicon plate as the sample matrix. The interference fringes 8 shown in Fig-7 where the silicon plate was utilized were not present in the spectrum observed with the wire mesh used in Figs 8-10. The interference fringes observed in Fig 7 are of classical sinoidal shape. Accordingly, Figs 8-10 show that the technique of this invention can be used to obtain excellent resolution as compared to conventional techniques and is superior to the use of conventional silicon plates by virtue of eliminating interference fringes.
Fig-11 shows the IR spectrum of ephedrine on a silicon plate. As can be seen in Fig-12 and Fig-13, equally good results were obtained by utilizing the technique of this invention. This is significant because it shows that expensive silicon plates can be eliminated by utilizing the procedure of this invention which is applicable to small crystalline compounds that do not form films.
Fig-14 shows the IR spectrum of benzophenone on a silicon plate. As can be seen in Fig-15 and Fig-16, equally good results were obtained by utilizing the technique of this invention. This is significant because it shows that expensive silicon plates can be eliminated by utilizing the procedure of this invention which is applicable to small crystalline compounds that do not form films.

### Detailed Description of the Invention

In practicing the present invention, a conventional infrared spectrometer is utilized in conjunction with a special sample carrier which is comprised of a mesh. The mesh is either opaque to the infrared light or, in the alternative, is totally transparent to the infrared light utilized by the spectrometer. In cases where the mesh is opaque, it does not transmit any infrared light in the wave number range used by the spectrometer. In cases where the mesh is totally transparent, it absorbs virtually none of the infrared light in the wave number range used by the spectrometer. Metal wire mesh has proven to be a good material for this purpose because it is opaque to infrared light. Other materials such as carbon fiber or polymeric filaments can be employed for this purpose as long as they are of sufficient diameter (thickness) to insure that all of the infrared light over the wave number range employed by the spectrometer is totally absorbed. In another scenario, polymeric materials utilized in the mesh can be filled with strong infrared absorbing materials such as carbon black, clay, talc, metal particles, dyes, and/or pigments. The material used in making the mesh can be virtually any solid that meets the following criteria: (1) is mechanically rigid dimensionally, (2) is substantially chemically inert towards the ambient environment and the sample to be analyzed, and (3) does not produce a significant IR spectrum of its own.

A sample carrier that can conveniently be used in accordance with this invention is illustrated in Fig-1. In the design shown in Fig-1 the mesh 2 is positioned between an upper mask 3 of a microtiter format, and a lower mask 4 of a microtiter format, which are held by a frame 1. As illustrated in Fig-2 this particular design provides 96 positions that are arranged in 8 rows of 12 positions. The mask in microtiter format can follow any accepted standard, for instance 96 well (position), 384 well, or 1,536 well microtiter format. However, the invention is not limited to these formats and any other array arrangement including the single sample arrangement can be used.

In Fig-3 the mesh 2 is exposed in the positions in the microtiter plate 3. The mesh will typically be within the mesh size range of 20 to 700 (wherein the holes in the mesh have a minimum size that is sufficient to allow particles having a particle size of smaller than 25 microns (µm) to pass through the mesh and a maximum size that will hold particles having a particle size of greater than 841 microns). More typically, the mesh will have a mesh size within the range of 40 to 500 (wherein the holes in the mesh have a minimum size that is sufficient to allow particles having a particle size of smaller than 30 microns (µm) to pass through the mesh and a maximum size that will hold particles having a particle size of greater than 420 microns) and will preferably be within the range of 100 to 400 (wherein the holes in the mesh have a minimum size that is sufficient to allow particles having a particle size of smaller than 37 microns (µm) to pass through the mesh and a maximum size that will hold particles having a particle size of greater than 149 microns). Metal wire mesh that is suitable for utilization in the practice of this invention is commercially available from Universal Wire Cloth, Morrisville, Pennsylvania 19067-3699. Metal wire utilized in such mesh will typically have a diameter which is within the range of 0.0254 mm (0.001 inch) to 1.27 mm (0.05 inch).

The mesh can be any perforated material of appropriate dimensions. The perforation of the mesh can be achieved through (1) weaving fibers or wires of any geometrically shaped cross section, (2) assembling the fibers or wires in any non-woven fashion, (3) stamping or etching a solid sheet of material, (4) expanding a suitable material, or (5) slicing a porous material into thin sheets. The mesh can also be coated to enhance certain aspects of its performance. For instance, the mesh can be coated with a thin layer of a highly inert material, such as gold, to provide a higher level of chemical inertness. Alternatively, a coating such as carbon can be applied to reduce the level of reflectivity of the mesh.

Fig-4 is a top view of a corner portion of the sample holder of this invention showing six positions in the microtiter plate. In cases where the sample is applied as a solution or as a melt or a liquid or solid dispersion, it is important for the mesh size to be small enough for capillary forces to adhere the sample to the mesh. Fig-5A is a cross sectional view of a position as viewed in the direction of the arrows as shown in Fig-4 immediately after the application of a sample 6 in a liquid carrier to the mesh 2. In this illustration capillary forces hold the liquid carrier containing the sample 6 to the mesh 2. In Fig-5A, Fig-5B, and Fig-5C the upper mask 3 of the microtiter plate and the lower mask 4 of a microtiter plate can also be seen with the mesh 2 between them. Fig-5B is a cross sectional view of a position as viewed in the direction of the arrows as shown in Fig-4 after a portion of the liquid carrier for the sample 6 has evaporated. Fig-5C is a cross sectional view of a position as viewed in the direction of the arrows as shown in Fig-4 after the liquid carrier for the sample has evaporated leaving only the sample 7 which is adhering to the mesh 2.

In preparing the sample for infrared analysis, it is typically put in a liquid carrier. For instance, it can be dissolved in a solvent, or in the alternative, dispersed or emulsified in a liquid. Then, the sample in the liquid carrier is applied to the mesh and the liquid carrier is allowed to evaporate. In another scenario, samples which can be molten can be heated to above their melting point and applied to the mesh as a molten liquid. After being cooled to below its melting point, the sample on the holder device can be analyzed in the spectrometer. In other alternative embodiments of this invention, the sample can be spin-cast or sputtered onto the mesh of the sample holder.

The most appropriate technique for applying the sample to the mesh on the sample holder will be dependent upon the nature and physical characteristics of the sample. For instance, only samples which are capable of melting can be applied to the mesh in the form of a molten liquid. By the same token, only samples which are capable of being dissolved in a solvent can be applied to the mesh in the form of a solution. One of the major advantages of this invention is that virtually any sample can be applied to the mesh of the sample holder by utilizing one of the aforementioned techniques. For instance, the sample can be a film-forming polymer in pure or dissolved form, a low molecular weight organic compound in solid or liquid form, an inorganic compound, or an organometallic compound.

The infrared spectrometer utilized in conjunction with practicing the process of this invention will include an infrared source that is capable of generating infrared light, and optical array, an infrared detector and a recorder of the transmitted spectrum. The infrared source will typically be a laser. The optical array will typically be a series of mirrors which are capable of being mechanically actuated. The infrared detector will typically be a semiconductor which is sensitive in the infrared region of the spectrum. The recorder can be any device capable of memorializing the amount of infrared light transmitted over the range of wave numbers employed in the spectroscopy. The device can record the spectrum on paper or on electronic media.

The sample holder of this invention is perhaps of its greatest value in a combinatorial or high throughput analysis array. This is because the samples can be consistently applied automatically to the mesh on the sample holder by a simple and rapid technique. In a preferred embodiment of this invention, the samples are applied to positions on a microtiter plate containing a plurality of such positions. For instance, in one such matrix, for utilization in conventional spectroscopy the microtiter plate contains 96 positions arranged as 8 rows of 12 positions. However, it should be understood that the technique of this invention can be practiced by adhering the sample being analyzed to a mesh without the need for a microtiter plate.

This invention is illustrated by the following examples that are merely for the purpose of illustration and are not to be regarded as limiting the scope of the invention or the manner in which it can be practiced. Unless specifically indicated otherwise, parts and percentages are given by weight.

Spectra were collected on a ThermoNicolet AVATAR 360 FTIR Spectrometer fitted with a Pike Technologies X-Y stage for automated sample analysis in a 96 well (position) microtiter format. The X-Y stage was controlled with AutoPro 5.0 software. The signal was collected with a detector contained within the X-Y stage. Data collection and processing was performed with Omnic Analytical and Omnic Macros Basic version 6.0 Software.

The silicon plate sample rack was custom manufactured by Pike Technologies. The silicon plate was 0.020 inch (0.508 mm) thick and was equipped with a proprietary anti-reflective coating. This plate was bonded to an aluminum mask with an adhesive. The aluminum mask had 1x6.3 mm circular perforation in a 96 well microtiter format.

A stainless steel wire mesh was obtained from Universal Wire Cloth Co. It was custom assembled in a sample rack by sandwiching swatches of the cloth material between two aluminum masks (an upper mask of microtiter plate format and a lower mask of microtiter plate format) with 1x6.3 mm circular perforation in a 96 well microtiter format. The assembly was then mounted in a frame that was compatible with the X-Y stage. The mesh sizes used were:
a) 135x135 mesh, wire diameter 0.0023 inch (0.05842 mm), open area 47%
b) 230x230 mesh, wire diameter 0.0014 inch (0.0356 mm), open area 46%
c) 400x400 mesh, wire diameter 00010 inch (0.0254 mm), open area 36%
All wire cloth was washed with methylenechloride before use.

Polystyrene, PSBR300K, having a weight average molecular weight of 300,000, was purchased from American Polymer Standards Corp. Benzophenone and (1 R,2S)-(-)-N-Methyl-ephedrine were purchased from Aldrich Chemical Co., Inc. A secondary polystyrene film was supplied with the Avatar 360 spectrometer as a standard. With exception of the polystyrene film, all samples were dissolved in tetrahydrofuran (OmniSolv®, HPLC grade, stabilized with 250 ppm butylated hydroxy toluene (BHT)). Sample solutions were generated by dissolving 200 mg of the sample in 2.5 mL THF and were deposited with a precision Eppendorf pipette fitted with a disposable tip. In all cases 5uL of the sample solution was deposited onto the mesh. After deposition the sample solutions were evaporated in air.

Data was collected in 64 scans and a resolution of 4 cm-1 in the range of 4000-500 cm-1. All spectra were auto baseline corrected but had no additional processing.

Fig-6 shows the resolution that was obtained with the polystyrene film standard. As can be seen by comparing it to Figs 7-10, essentially the same resolution was achieved by using a conventional silicon plate or the wire mesh sample matrix of the present invention. Additionally, Figs 8-10 are free of interference fringes 8 as are visible in Fig-7 which used a conventional silicon plate as the sample matrix. The interference fringes 8 shown in Fig-7 where the silicon plate was utilized were not present in the spectrum observed with the wire mesh used in Figs 8-10. The interference fringes observed in Fig 7 are of classical sinoidal shape. Accordingly, Figs 8-10 show that the technique of this invention can be used to obtain excellent resolution as compared to conventional techniques and is superior to the use of conventional silicon plates by virtue of eliminating interference fringes.

Fig-11 shows the IR spectrum of ephedrine on a silicon plate. As can be seen in Fig-12 and Fig-13, equally good results were obtained by utilizing the technique of this invention. This is significant because it shows that expensive silicon plates can be eliminated by utilizing the procedure of this invention which is applicable to small crystalline compounds that do not form films.

Fig-14 shows the IR spectrum of benzophenone on a silicon plate. As can be seen in Fig-15 and Fig-16, equally good results were obtained by utilizing the technique of this invention. This is significant because it shows that expensive silicon plates can be eliminated by utilizing the procedure of this invention which is applicable to small crystalline compounds that do not form films.

## Claims

1. A sample carrier for holding a sample during infrared spectroscopic analysis, said sample carrier being comprised of a frame (1), a mask (3, 4) in microtiter plate format, and a mesh (2) which is affixed to the mask (3, 4), wherein the mesh is opaque or totally transparent to infrared light, and wherein the mesh size has holes that have a minimum size that is sufficient to allow particles having a particle size of smaller than 25 µm to pass through the mesh (2) and a maximum size that will hold particles having a particle size of greater than 841 µm.

2. The sample carrier as specified in claim 1, **characterized in that** the mask (3, 4) contains a plurality of positions, wherein the mesh occupies the positions, and/or wherein the mesh (2) is opaque to infrared light.

3. The sample carrier as specified in claim 1 or 2, **characterized in that** the mesh (2) is a woven metal wire cloth.

4. The sample carrier as specified claim 1, 2, or 3, **characterized in that** the mesh size has holes that have a minimum size that is sufficient to allow particles having a particle size of smaller than 30 µm, preferably 37 µm, to pass through the mesh and a maximum size that will hold particles having a particle size of greater than 420 µm, preferably 144 µm.

5. The sample carrier as specified in at least one of the preceding claims, **characterized in that** the wire cloth is comprised of wires having a diameter of 0.0254 mm to 1.27 mm, preferably 0.0254 mm to 0.0508 mm..

6. The sample carrier as specified in at least one of the preceding claims, wherein the mask (3, 4) contains 96 positions that are arranged in 8 rows of 12 positions, or wherein the mask contains 384 or 1536 positions.

7. In an infrared spectrometer which includes an infrared source, an optical array, an infrared detector and a means for recording transmitted spectrum over a range of wave numbers, and a sample carrier according to at least one of the previous claims.

8. A process for determining the infrared spectrum of a sample comprising the steps of transmitting infrared light through said sample over a range of wave numbers and recording the signal of the transmitted infrared light over the range of wave numbers during the sample (6, 7) is held by a mesh (2) which is opaque or totally transparent to infrared light, **characterized in that** particles having a particle size of smaller than 25 µm are allowed to pass through the mesh (2) and particles having a particle size of greater than 841 µm are hold through the mesh (2).
